# EUROPEAN PATENT SPECIFICATION

(11) **EP 3 658 977 B1**
(45) Date of publication and mention of the grant of the patent: **29.10.2025**
(21) Application number: 18745905.2
(22) Date of filing: 24.07.2018
(51) Int. Cl.: G02B 27/01, G02B 5/20, G03H 1/04, G03H 1/02, G03H 1/26, G02B 5/23, G03H 1/22

(54) **OPTICAL ARTICLE WITH A HOLOGRAPHIC WAVEGUIDE**
OPTISCHER ARTIKEL MIT EINEM HOLOGRAPHISCHEN WELLENLEITER
ARTICLE OPTIQUE COMPRENANT UN GUIDE D'ONDES HOLOGRAPHIQUE

(30) Priority: 25.07.2017 EP 17305999
(43) Date of publication of application: 03.06.2020
(73) Proprietor: Essilor International, 94220 Charenton-le-Pont (FR)
(72) Inventor: BOUCHIER, Aude, 94220 Charenton Le Pont (FR); BIVER, Claudine, 94220 Charenton Le Pont (FR)
(74) Representative: Plasseraud IP
(86) International application number: PCT/EP2018/069994
(87) International publication number: WO 2019/020603

(56) References cited:
- WO-A1-2016/044462
- WO-A1-2016/202595
- JP-A- 2016 004 809
- US-A1- 2017 160 700
- US-B1- 6 879 441

## Description

### Field of the invention

The present invention relates to the integration of passive and active components within smart eyeglasses and windows, for example, and to the selective collection of light arriving on such smart devices as well as the selective emission of light in the direction of the user.

### Background of the invention

The integration of components within smart eyeglasses or windows has many interesting applications.

For example, in the case of electrochromic (EC) or liquid crystal glasses and windows, sensors are used to measure the luminosity of the environment and to control the activation of the electrochromic elements or liquid crystals to avoid glare for the user.

However, the autonomy of such smart glasses and windows is limited by the batteries that can be integrated within their frame. Integration of sensors within such optical devices can also be complicated given the limited space available, and can require making holes or special adaptations of the frame.

Another example of smart eyeglasses are head mounted displays, wherein light produced by a display is directed in the direction of the eye of the wearer using glass plates having facets to reflect the light emitted by the display in the direction of the eye of the wearer.

For instance, an embodiment of head mounted display is disclosed in document WO2013/138107. US2017/160700A1 is an example of the prior art of an ophthalmic lens with a holographic optical element.

These glass plates have a thickness of few mm and are bulky. Moreover, they are necessarily flat, which render their integration in the glasses of everyday life eyewear uneasy. The resulting device can be heavy, uncomfortable and unaesthetic for the wearer.

Some eyeglasses are also equipped with filters adapted to selectively reflect light of unwanted wavelengths such as UV or some blue wavelengths, in order to avoid that such wavelengths be directed towards the wearer. However, these filters can reflect light towards other users and may also induce unaesthetic colored reflections. It would be thus desirable to provide a selective filter which allows collection of unwanted wavelengths without reflecting the latter towards other users.

There is thus a need to improve the selective directed emission of light towards the user in applications such as head mounted displays in smart eyeglasses, in addition to the need for a selective collection of light received by the eyewear or windows in applications in which a filter or a sensor is integrated to an optical device.

### Presentation of the invention

In view of the above, one aim of the invention is to alleviate at least part of the inconveniences of the prior art.

In particular, one aim of the invention is to render easier the integration of smart components such as a sensor, a display, or a photovoltaic cell into an optical device, while keeping such optical device of compact design.

Another aim of the invention is to allow selective collection of wavelengths directed towards an optical device without reflecting those wavelengths towards other users.

Another aim of the invention is to allow the manufacturing of eyeglasses incorporating head mounted displays which are lighter, more comfortable and aesthetic for users.

To this end, it is proposed an optical article according to claim 1.

In embodiments, the optical article may further comprise one or a combination of the features of the dependent claims.

The optical article according to the invention allows directing light from one zone located on a surface of the waveguide towards the periphery thereof. The light that is directed within the holographic waveguide can be selected according to its wavelength and orientation relative to the waveguide. This makes it possible to filter undesired wavelengths such as UV or blue wavelengths without reflecting them towards other users.

A sensor can also be provided at the periphery of the optical article or within a frame of the optical article, in order to measure features of the collected light. For instance, such a sensor can measure the ambient luminosity and control electrochromic (EC) or liquid crystal glasses.

The optical article also allows directing light from an emitter oriented towards the peripheral edge of the optical article to a user. It can therefore be used for example in head mounted displays applications. As the optical article is obtained by forming a holographic waveguide on a substrate, said substrate can be a curved ophthalmic lens. Therefore, the waveguide can be easily integrated in a curved ophthalmic lens and the resulting eyeglasses comprising a head mounted display can be lighter, more aesthetic, and less bulky.

### Brief description of the drawings

Further details, aspects and embodiments of the proposed solution will be described, by way of example only, with reference to the drawings.
Figures 1A, 1B and 1C illustrate an optical article for three different embodiments.
Figures 2A, 2B and 2C illustrate the principle of a holographic waveguide.
Figures 3A, 3B and 3C illustrate different arrangements of the first and the second zones of the holographic waveguide and some of their applications.
Figures 4A and 4B illustrate a front view and a side view of a holographic waveguide comprising a coupling device.
Figure 5 illustrates an example of an optical set-up used for the recording of a holographic waveguide.
Figure 6 illustrates an arrangement of a plurality of holographic waveguides and an example of application, according to an embodiment.

### Description

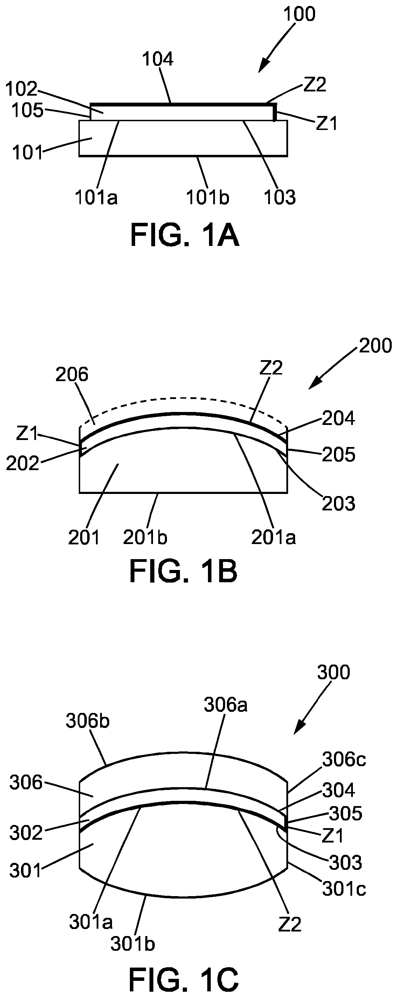

Figure 1A illustrates an optical article 100 according to a first embodiment. The optical article 100 comprises a substrate 101 and a holographic waveguide 102. The substrate 101 has a first and a second surface 101a, 101b respectively. The substrate 101 is a planar surface and may be a window, for example. The holographic waveguide 102 covers at least part of the substrate and comprises a first main surface 103, a second main surface 104 and a peripheral edge 105. The first main surface 103 thus conforms to the planar surface of the substrate 101. The second main surface 104 is substantially parallel to the first main surface 103.

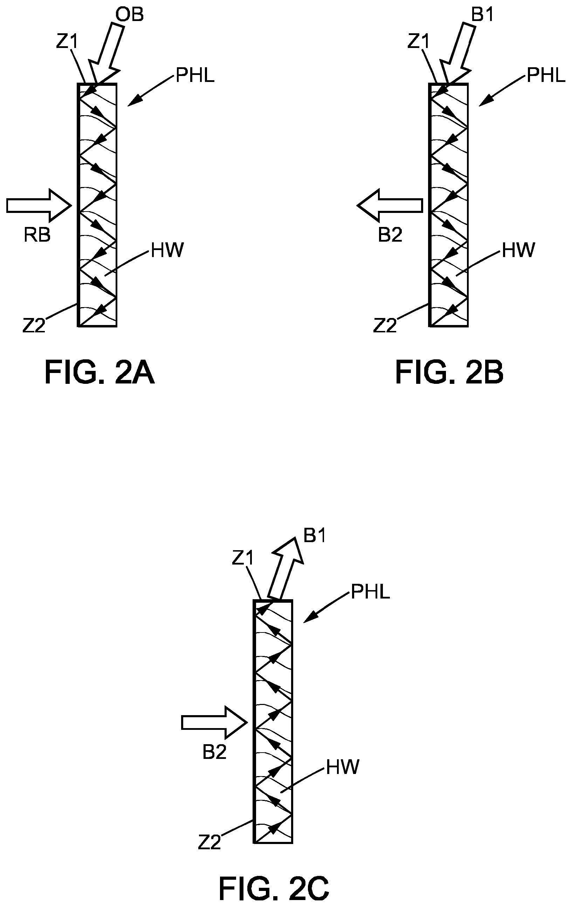

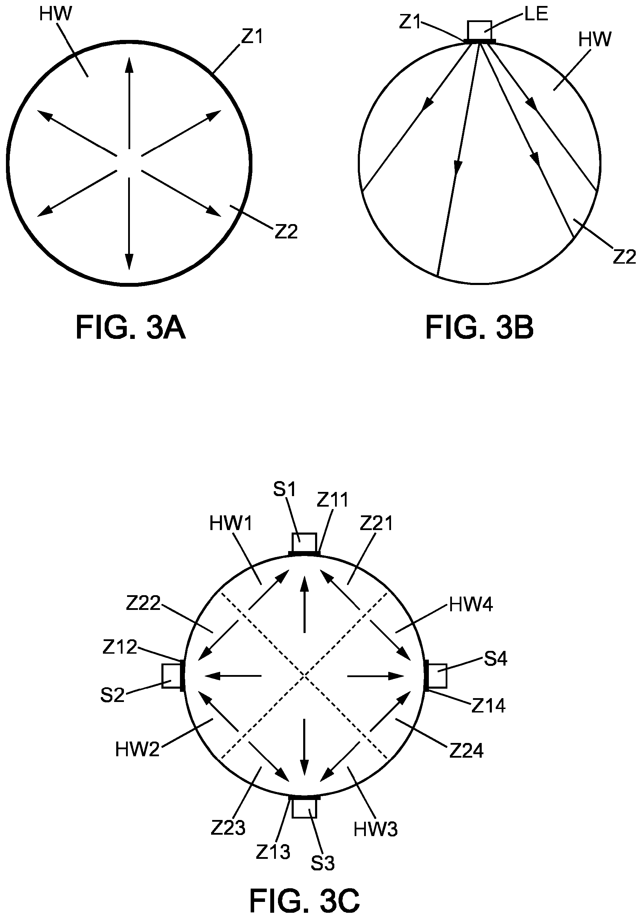

The holographic waveguide 102 further comprises a first zone Z1 and a second zone Z2. The first zone Z1 comprises at least a portion of the peripheral edge 105 of the holographic waveguide 102 and the second zone Z2 comprises at least a portion of one of the two main surfaces 103, 104 of the holographic waveguide 102. The holographic waveguide 102 is configured so that light incoming on the first zone Z1, is at least partially guided towards the second zone Z2, the first zone Z1 being an input zone and the second zone Z2 being an output zone or that light incoming on the second zone Z2 is at least partially guided towards the first zone Z1, the second zone Z2 being the input zone and the first zone Z1 being the output zone, depending on the application considered which are illustrated in reference to figures 3A, 3B and 3C. The holographic waveguide 102 will be further described in reference to figures 2A, 2B, 2C.

Figure 1B illustrates an optical article 200 according to a second embodiment. The optical article 200 comprises a substrate 201 and a holographic waveguide 202. The substrate 201 has a first and a second surface 201a, 201b respectively. At least the first surface 201a is curved. The substrate 201 may be a semi-finished lens blank in which case the second surface 201b is planar as represented in Figure 1B. The second surface 201b is intended to be machined according to data relative to the wearer such as prescription data including spherical power and astigmatism. The substrate 201 may be an ophthalmic lens, in which case the second surface 201b is curved.

The holographic waveguide 202 covers at least part of the substrate 201 and comprises a first main surface 203, a second main surface 204 and a peripheral edge 205. The first main surface 203 conforms to the curved surface 201a of the substrate 201. The second main surface 204 is substantially parallel to the curved first main surface 203. The holographic waveguide is thus curved and the obtained semi-finished lens blank or ophthalmic lens is thus less bulky, and in particular less bulky than with the usual thick straight waveguides.

The holographic waveguide 202 further comprises a first zone Z1 and a second zone Z2 as described previously.

The optical article 200 may further comprise one or more additional layers 206. The additional layers 206 may be one or more of another holographic waveguide, a protective layer, film or wafer, a functional layer such as an antireflection coating, a polarizing layer, a layer comprising photochromic elements, a layer comprising electrochromic elements, a layer comprising liquid crystal cell elements and/or an at least partly transparent conductive layer, for example. Two at least partly transparent conductive layers may be used for example to control a layer comprising electrochromic or liquid crystal cell elements or to control an active holographic waveguide.

The one or more additional layers 206 may be placed on top of the holographic waveguide 202, i.e. on the second main surface 204, as represented in Figure 1B and/or below the first main surface 203 of the holographic waveguide 202. According to a variant, the substrate 201 comprises the additional layer 206 and the first surface 201a of the substrate is formed by the additional layer 206, for example.

Figure 1C illustrates an optical article 300 according to a third embodiment. The optical article 300 comprises a first substrate 301, a holographic waveguide 302 and a second substrate 306. The first substrate 301 and the second substrate 306 comprise two main surfaces 301a, 301b and 306a, 306b, respectively. The first substrate 301 and the second substrate 306 also comprise a peripheral edge 301c and 306c, respectively. The holographic waveguide 302 comprises a first main surface 303, a second main surface 304 and a peripheral edge 305. The first main surface 303 of the holographic waveguide 302 conforms to the main surface 301a of the first substrate 301 and the second main surface 304 of the holographic waveguide 302 conforms to the first surface 306a of the second substrate 306. The holographic waveguide is thus embedded within the optical article 300 between the first and the second substrate 301, 306. The holographic waveguide 302 further comprises a first zone Z1 and a second zone Z2 as described previously.

The optical article 300 may be an ophthalmic lens, in which case the external surfaces 306b and 301b are preferably curved as represented in Figure 1C. The optical article 300 may also be a semi-finished blank, in which case only one of the external surfaces 306b or 301b is curved.

The first and second surfaces 303, 304 of the holographic waveguide 302 are preferably substantially parallel to each other. The internal surfaces 301a and 306a of the first and second substrates 301, 306 may have the same radius of curvature than the external surfaces 306b and 301b. In an alternative, the internal surfaces 301a and 306a of the first and second substrates 301, 306 may be flat.

In the embodiments of figure 1B and 1C, the optical articles 200, 300 may be a semi-finished lens blank or an ophthalmic lens and one of the main surfaces, the rear surface, is intended to be directed in the direction of an eye of the wearer and the other main surface, the front surface, is intended to be directed towards an exterior environment. The substrates 301 and 306 could bear part of corrective functions like prescription, astigmatism, addition.

The optical article 300 may be formed by injection of the photosensitive material between the first and second substrates 301, 306, the first and the second substrates 301, 306 being maintained at a given distance corresponding to the width of the holographic waveguide and part of the space between the two substrates 301, 306 being occluded on its periphery. According to another variant, the holographic waveguide 302 may be bonded to the internal surfaces 301a and 306a of the first and second substrates 301, 306. When the holographic waveguide is an active holographic waveguide, the active holographic waveguide is surrounded by two at least partly transparent conductive layers which are bonded to the internal surfaces 301a and 306a of the first and second substrates 301, 306.

The optical article 300 may also be a window, in which case both external surfaces 306b or 301b are planar.

It may be noted that the holographic waveguide may extend over at least 10% of the surface of one of the substrates described previously, preferably over at least 50% of said surface, even more preferably over at least 70% of said surface and even more preferably over the whole surface of the substrate.

Holographic waveguides are formed of a photosensitive material comprising a refractive index that varies spatially according to at least one frequency. Holographic waveguides are recorded using a holographic set-up. Holographic waveguides may be passive or active. Active holographic waveguides may, for example, be activated or deactivated, when the photosensitive material is mixed with liquid crystals. Examples of active holographic gratings are holographic polymer dispersed liquid crystals (H-PDLC) disclosed in WO2017/005608, Polycrips or Polyphems as described in the document EP 2187254 A1, for example.

Figure 2A illustrates schematically the recording of a holographic waveguide HW in a photosensitive layer PHL formed by the photosensitive material. The photosensitive material may be a photopolymer or dichromated gelatin, for example, and is deposited on a substrate (not represented) such as the ones previously described.

Photopolymers may be in any physical state (liquid, solid, paste, etc.) and include those solid and those liquid under standard conditions. Photopolymer formulations contain generally one or more monomers or oligomers presenting for instance an ethylenically unsaturated photo polymerizable part and a system of photoinitiation of polymerization with at least one component that is sensitive to the illumination wavelength. They may contain a combination of a photo- initiator and a photo-sensitizer that allow the increase of the range of the spectral sensitivity for visible light.

These photopolymer formulations may contain various additives such as, in a not exhaustive list, polymers, solvents, plasticizers, transfer agents, surfactants, anti-oxidizing agents, thermal stabilizers, anti-foaming agents, thickeners, levelling agents, catalysts and so on.

Examples of photopolymers include commercial photopolymers, such as OmniDex (E.I. du Pont de Nemours (EP 0377182 A2)), Bayfol HX (formerly Bayer, nowadays Covestro), Darol (Polygrama) or SM-TR Photopolymer (Polygrama).

The photopolymer formulations may also be mixed with liquid crystal mixtures to form active holographic waveguides. Depending on their composition, in particular on the presence or not of solvents and on their viscosity, different types of processing can be envisaged. The formulations containing solvents can be processed in different ways, for example by spin coating, dip coating, spray or bar coating, or coating by inkjet printing of a plane substrate, for example of glass (mineral or organic), or by spin coating, dip coating, spray coating or coating by inkjet printing on a curved substrate, for example of glass (mineral or organic), in order to obtain the desired thickness. After coating, a step of evaporation of the solvent(s) is generally necessary to obtain the layer of photopolymer ready to be recorded. When the formulations do not contain solvents, they can be used in the same way if their viscosity is not too high. In this case the evaporation step is not necessary.

Some of the methods described for coating the substrate with the photosensitive material may also be applied on substrates comprising an additional layer.

The thickness of the photosensitive layer is typically comprised between 1 and 100 µm and is preferably comprised between 4 and 60 µm.

The photosensitive layer PHL is viewed from the side. Like in any holographic set- up, the layer of photosensitive material is exposed to at least two different beams: a reference beam RB and an object beam OB. The reference beam RB and the object beam OB may be formed of parallel, converging or diverging rays of light depending on the application considered.

The reference beam RB incomes on one of the two main surfaces of the photosensitive layer on the second zone Z2 and the object beam OB incomes on one edge of the photosensitive layer PHL on the first zone Z1. The object beam OB is coupled into the photosensitive layer and propagates at least partially through the photosensitive layer. The photosensitive layer forms a waveguide, as it is formed of a material having a refractive index that is higher than the refractive index of the surrounding air. The light comprised within the object beam OB is thus guided in the photosensitive layer PHL. An interference pattern is formed by the superposition of the object beam OB and the reference beam RB in the photosensitive layer. The interference pattern is recorded within the photosensitive material as a variation of the refractive index after specific processing of the photosensitive material. The refractive index of the photosensitive material thus varies spatially according to at least one frequency. In particular, the refractive index varies as a function of the intensity of the interference pattern.

When the photosensitive material is a photopolymer, the refractive index variation is induced by the polymerization of the monomers or oligomers.

When the photopolymer is mixed with liquid crystals, the refractive index variation is induced by an alternation of regions with liquid crystals and polymerized monomers or oligomers. Depending on the formulations used, the bright interference fringes may be formed by the liquid crystals or by the polymerized monomers or oligomers. By applying a tension on two electrodes formed of a conductive layer placed on both sides of the photosensitive layer in which the holographic waveguide is recorded, the liquid crystals may change their orientation and thus the effective refractive index as seen by the light going through the photosensitive layer. With an appropriate choice of the photopolymer formulations and the liquid crystal mixtures formulations, it is possible to match the refractive index in the regions comprising the liquid crystals with the refractive index in the regions comprising the polymerized photopolymer. It is thus possible to activate or deactivate the holographic waveguide depending on the tension applied on the conductive layers placed on both sides of the holographic waveguide.

When the reference beam RB and the object beam OB are formed of parallel rays of light, the refractive index varies according to one frequency depending on the angle between the reference beam RB and the object beam OB. When at least one of the RB or the object beam OB is converging or diverging, the refractive index varies spatially according to other frequencies.

Figure 2B and figure 2C illustrate schematically two different ways of reading the holographic waveguide.

In figure 2B, a beam B1 of light is incoming on the edge of the photosensitive layer PHL, on the first zone Z1. Some of the light from the beam B1 is coupled into the photosensitive layer and into the holographic waveguide. The coupled light is at least partially guided within the holographic waveguide towards the second zone Z2. The light is then coupled out of the holographic waveguide and comes out of the second zone Z2 forming a beam B2.

Only the part of the beam B1 corresponding to the object beam is efficiently coupled into the holographic waveguide HW. When the wavelength used for reading is the same wavelength as used for recording, the beam B2 coming out of the holographic waveguide corresponds to the reference beam RB such that the rays of light of B2 have the same angular repartition as the reference beam RB but propagates in the opposite direction. Otherwise, when the wavelength used for reading is different from the wavelength used for recording, the angular repartition of the rays of light of the beam B2 is dependent of the spatial refractive index variation or modification corresponding to the recorded interference pattern.

In the embodiment of figure 2B, light arriving on a zone Z1 on the edge of the holographic waveguide HW comes out of the zone Z2 on one of the main surfaces of the holographic waveguide HW with a particular angular repartition.

In figure 2C, a beam B2 of light is incoming on one of the main surfaces of the photosensitive layer PHL, on the second zone Z2. Some of the light from the beam B2 is coupled into the photosensitive layer PHL and into the holographic waveguide HW. The coupled light is at least partially guided within the holographic waveguide HW towards the first zone Z1. The light is then coupled out of the holographic waveguide HW and comes out of the holographic waveguide out of the first zone Z1 forming a beam B1. The beam B1 corresponds to the object beam OB but propagates in the opposite direction.

The part of the beam B2 corresponding to the object beam OB is efficiently coupled into the holographic waveguide HW. When the wavelength used for reading is the same wavelength as used for recording, the beam B1 coming out of the holographic waveguide corresponds to the object beam OB such that the rays of light of B1 have the same angular repartition as the object beam OB but propagates in the opposite direction. Otherwise, when the wavelength used for reading is different from the wavelength used for recording, the angular repartition of the rays of light of the beam B1 dependent on the spatial refractive index variation corresponding to the recorded interference pattern.

In the embodiment of figure 2C, light incoming on a second zone Z2 of the holographic waveguide HW with a particular angular repartition can be collected on the edge of the holographic waveguide HW in the vicinity of the first zone Z1.

The holographic waveguide HW thus enables to selectively propagate light incoming on one of the first and second zones Z1, Z2 to the other of the first and second respective zones Z2, Z1. The light coming in or out of the first and second zones has an angular repartition defined by the refractive index varying spatially along at least one frequency corresponding to the interference pattern recorded in the photosensitive material. Further, holographic waveguides selectively propagate light incoming on one of the first and second zones Z1, Z2 to the other of the first and second respective zones Z2, Z1 for specific wavelengths which are dependent of the refractive index variation corresponding to the recording of the interference pattern.

Figures 3A, 3B and 3C illustrate different non-limiting arrangements of the first and the second zones of the holographic waveguide.

Figure 3A illustrates a top view of a holographic waveguide HW comprising a first zone Z1 extending over the whole peripheral edge of the holographic waveguide and a second zone Z2 extending over one of the main surfaces of the holographic waveguide.

In such an arrangement, light arriving on the second zone Z2 may for example be collected and guided towards the first zone Z1 of the peripheral edge of the holographic waveguide. The holographic waveguide may thus be used for rejecting harmful wavelengths such as UV or some blue wavelengths comprised between 380 to 450 nm which are not transmitted through the substrate and not directed towards other users. The holographic waveguide may thus act as a selective filter. The light coming out of the first zone Z1 may be collected by an absorber or a light trap. Alternatively, the light may be collected by a photovoltaic cell, the photovoltaic cell supplying electrical power to batteries disposed within a frame of the optical device, said batteries providing in electricity the electrodes of electrochromic or liquid crystal glasses and windows or head mounted displays, for example.

Figure 3B illustrates a top view of a holographic waveguide HW comprising a first zone Z1 extending over a portion of the peripheral edge of the holographic waveguide and a second zone Z2 extending over one of the main surfaces of the holographic waveguide.

In such an arrangement as illustrated in Figure 3B, the first zone Z1 may be of the size of a light emitter LE such as a light emitting diode having a size of 2 mm². The light emitted by the light emitting diode may be guided towards the second zone Z2 of the main surface of the holographic waveguide. The holographic waveguide may thus be used for illuminating the eye of the wearer of the ophthalmic lens with a specific wavelength comprised between 470 and 510 nm, for example. Such a wavelength may be used in light therapy to treat circadian rhythm disorders such as delayed sleep phase disorder and may also be used to treat seasonal affective disorder for example.

Such arrangement may also be used to perform eye-tracking by building an integrated eye-tracker in a pair of eyeglasses. An eye-tracker mainly uses a camera as sensor and IR sources (mainly LEDs) to lighten the tracked eye. The camera measures the orientation or the position of the eye. The holographic waveguide may be used to guide IR light in the direction of the wearer's eye. A holographic grating acting as a mirror may be placed on top of the lens. The holographic grating is configured to reflect light coming from the wearer's eye in the direction of a camera integrated in the hinge or temple of the frame.

Alternatively, the first zone Z1 may be of the size of a light sensor having a size of a few mm². Similarly to the example of figure 3A, light coming in the holographic waveguide on the second zone Z2 and coming out of the first zone Z1 may be collected by a sensor, the resulting device may then be used as a dosimeter.

Figure 3C illustrates a plurality of holographic waveguides HW1, HW2, HW3, HW4. The holographic waveguides HW1, HW2, HW3, HW4 are adjacent to each other and cover at least a part of the substrates previously described. Each holographic waveguide HW1, HW2, HW3, HW4 respectively comprises a first zone Z11, Z12, Z13, Z14 and a second zone Z21, Z22, Z23, Z24. The second zones Z21, Z22, Z23, Z24 extend over the whole surface of the holographic waveguides HW1, HW2, HW3, HW4. The first zones Z11, Z12, Z13, Z14 extend over a portion of the peripheral edge of the holographic waveguides HW1, HW2, HW3, HW4.

The different holographic waveguides HW1, HW2, HW3, HW4 may be used to collect light arriving on different portions of the substrate corresponding to the second zones Z21, Z22, Z23, Z24 of the holographic waveguides HW1, HW2, HW3, HW4 and to measure the collected light coming out of the first zones Z11, Z12, Z13, Z14 using different sensors S1, S2, S3, S4, for example.

Such an arrangement may be used to detect light incoming on different portion of the substrate potentially from different directions and may be used to control electrochromics or liquid crystals of smart eyeglasses or windows.

Such an arrangement may also be used to detect different wavelengths incoming on different portions of the substrate and may be used to control tunable filters depending on the amount of light that is detected. Examples of tunable filters that may be used are given in WO2017/032649.

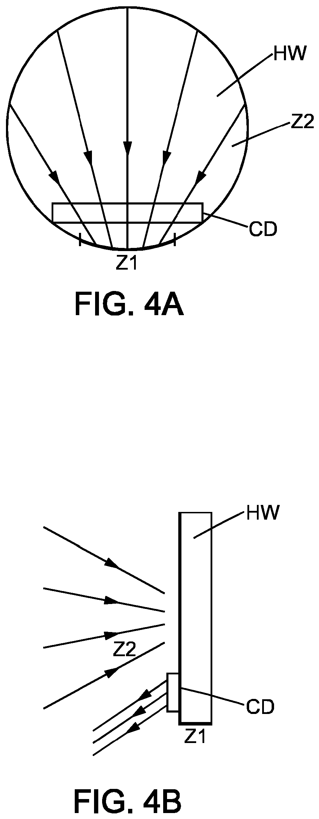

Figure 4A and 4B illustrate a front view and a side view of a holographic waveguide HW comprising a coupling device CD. The coupling device CD is located on the periphery of one of the main surfaces of the holographic waveguide. In an alternative, the coupling device CD may be located on the peripheral edge of the holographic waveguide. The coupling device is configured to couple light into or out of the holographic waveguide, i.e. to extract or inject light into the holographic waveguide. The coupling device may be chosen from a coating, a protrusion and/or depression structure, a diffusing element or a holographic grating such as a Bragg grating recorded in the holographic waveguide, for example. The protrusion and/or depression structure may be formed of single protrusions or depressions positioned on the substrate in contact with the holographic waveguide for example, or a periodic succession of protrusions and/or depressions thereby forming a corrugated grating, or even more complex structures such as diffractive optical elements. Examples of such depression and/or protrusion structures are described for example in the document WO 2009/032721.

In the example of figures 4A and 4B, the light incoming on the holographic waveguide HW on the second zone Z2 on one of the main surfaces of the holographic waveguide is at least partially guided towards the first zone Z1 of the holographic waveguide HW. Part of the light guided towards the first zone Z1 is coupled out, i.e. extracted from the holographic waveguide by the coupling device CD and propagates out of the holographic waveguide HW in the direction of optical components configured to receive the light output by the coupling device. Such optical components may be sensors, photovoltaic cells, light traps or absorbers which are placed on the frame of the smart eyeglass or window.

Alternatively, light may be coupled into, i.e. injected into, the holographic waveguide HW through the coupling device CD and light is then partially guided from the coupling device CD towards the second zone Z2 of the holographic waveguide HW. Optical components such as light emitters are positioned on the frame of the smart eyeglass or window in the vicinity of the holographic waveguide such that the light is emitted in the direction of the coupling device CD.

The position of the optical components within the frame of the eyeglass or window may thus be adjusted by choosing the position of the coupling device so that light emitted or received by the optical components is directed towards the coupling device. It enables more flexibility in the design and integration of optical components within the frame of eyeglasses according to the invention.

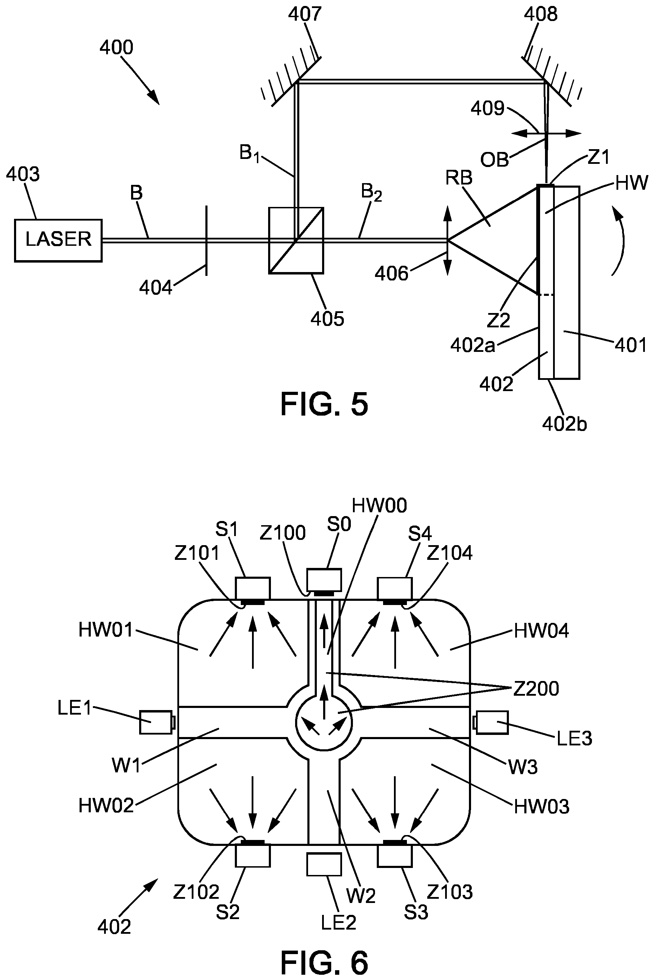

Figure 5 illustrates an example of an optical set-up used for the recording of a holographic waveguide on a photosensitive layer 402 being placed on a substrate 401.

The optical set-up 400 comprises a source of coherent light such as a laser 403 emitting light along one initial linear polarization for example, a half wavelength plate 404, a polarizing beam splitter 405, two mirrors 407, 408, a first beam forming assembly 409 and a second beam forming assembly 406.

The optical set-up 400 is adapted to produce a reference beam RB and an object beam OB from a single laser beam B0. The reference beam RB is intended to be directed towards at least a portion of a main surface 402a of the photosensitive layer 402 corresponding to the second zone Z2 of the holographic waveguide. The object beam OB is intended to be directed towards at least a portion of the peripheral edge 402b of the photosensitive layer 402 corresponding to the first zone Z1 of the holographic waveguide HW.

A laser beam B0 coming from the laser 403 has an initial linear polarization. The laser 403 may directly emit a linearly polarized beam B0 or an additional quarter wavelength plate may be used to obtain a linearly polarized beam B0. The direction of the polarization may be modified by rotating a half wavelength plate 404. The laser beam B0 is then divided into two laser beams B01 and B02 using a polarization beam splitter 405 by reflecting light having a first linear polarization and transmitting light having a second linear polarization perpendicular to the first linear polarization. The half wavelength plate 404 is rotated in order to control the respective intensity of the two laser beams B01 and B02. The first beam B01 is directed towards the peripheral edge 402b of the photosensitive layer 402 using two mirrors 407 and 408. The first beam B01 is formed into the object beam OB using the first beam forming assembly 409. The object beam OB is formed of converging rays of light and is focused into the peripheral edge 402b of the photosensitive layer 402. The reference beam RB is formed of parallel, diverging or converging rays of light depending on the application using the second beam forming assembly 406. The first and the second beam forming assemblies 406, 409 may comprise one or more lenses to form convergent or divergent beams. The first and the second beam forming assemblies 406, 409 may also comprise masks to delimitate the zones Z1, Z2 and/or matrices of liquid crystals to control the intensity and/or phase of the beams B01, B02, for example. Alternatively, the substrate 401 used for the recording of the holographic waveguides may comprise a mask to delimitate the extent of the holographic waveguide(s) recorded into the photosensitive layer. The substrate 401 may be rotated to increase the size of the first zone Z1 of the holographic waveguide relative to the size of the focused object beam OB.

Different holographic waveguides may be recorded on a same photosensitive layer 402 by translating and rotating the substrate 401 and by adapting the position of the first and second zones on the photosensitive layer 402. The first beam forming assembly 406 may be chosen as a function of the wanted reference beam RB for each recording of a new holographic waveguide HW. In one embodiment, after the recording of one or more holographic waveguides within a same photosensitive layer 402, the photosensitive layer may be retrieved from the substrate 401 and be placed on one of the substrates 101, 201 of figures 1A, 1B.

In another embodiment, the holographic waveguide HW is directly recorded on one of the photosensitive layers 102, 202 covering the substrates 101, 201 of the optical articles 100, 200 of figures 1A, 1B, 1C. In yet another embodiment, the photosensitive layer 302 of figure 1C is directly recorded while being embedded between the first and the second substrates 301, 306.

The different holographic waveguides may be adjacent and touch each other as previously illustrated in Figure 3C or may be separated by a space formed of the photosensitive layer 402. The space between the different holographic waveguides may be used to implement other functions as illustrated in Figure 6.

Figure 6 illustrates a top view of a photosensitive layer comprising four peripheral holographic waveguides HW01, HW02, HW03, HW04 and one central holographic waveguide HW00.

The central holographic waveguide HW00 has a portion of its second zone Z200 placed in the center of the photosensitive layer and one peripheral portion extending towards the edge of the photosensitive layer. The first zone Z100 is placed on the peripheral edge of the photosensitive layer.

The peripheral holographic waveguides HW01, HW02, HW03, HW04 are adjacent to the central portion of the second zone Z200 and the holographic waveguides HW01 and HW04 are also adjacent to the peripheral portion of the second zone Z200 of the central holographic waveguide HW00. The peripheral holographic waveguides are similar to the holographic waveguides HW1, HW2, HW3, HW4 previously described in reference to Figure 3C. The holographic waveguides HW01, HW02, HW03, HW04 respectively comprise a first zone Z101, Z102, Z103, Z104 located on a portion of the peripheral edge of each holographic waveguide. Advantageously, the photosensitive layer further comprises three waveguides W1, W2 and W3. The waveguides are formed by a portion of the photosensitive layer comprised between the holographic waveguides. On top of each waveguide is formed a holographic mirror configured to couple out the light guided into the waveguides.

Such an arrangement may also be used to build an integrated eye-tracker in the frame of an eyeglass. IR light emitted by IR LEDs integrated in the frame of the eyeglass is then guided into the three waveguides W1, W2, W3 towards the center of the ophthalmic lens. The IR light is then coupled out of the waveguides via the holographic mirrors and then directed towards an eye of a wearer.

The light reflected by the eye of the wearer is then directed towards the ophthalmic lens and more particularly in the direction of at least some of the second zones of the holographic waveguides HW00, HW01, HW02, HW03, HW04 which act as input zones. The light is then guided towards the first zones Z100, Z101, Z102, Z103, Z104 of the holographic waveguides HW00, HW01, HW02, HW03, HW04 at the peripheral edge of the ophthalmic lens. The amount of light collected by each holographic waveguide in the output zones Z100, Z101, Z102, Z103, Z104 may then be measured by a sensor S0, S1, S2, S3, S4. The sensors may be placed in the vicinity of the corresponding output zones Z100, Z101, Z102, Z103, Z104 on the peripheral edge of each holographic waveguide for example. An optional coupling device may be used when the sensors S0, S1, S2, S3, S4 or the light emitters LE1, LE2, LE3 are not placed directly on the peripheral edge of each holographic waveguide.

According to this embodiment, the orientation of an eye of the wearer may be determined based on the differences in the measured reflection of five different zones formed by the input zones of the holographic waveguides. The light reflected by the eye of the wearer may differ depending on which parts of the eye (sclerotic, pupil and iris) are illuminated because of the differences of surfaces, absorptions and geometries of each part of the eye for example.

## Claims

1. Optical article (100; 200; 300) comprising at least:
- a substrate (101; 201; 301), being a semi-finished lens blank or an ophthalmic lens, and
- a holographic waveguide (102; 202; 302) formed of a photosensitive material comprising a refractive index varying spatially according to at least one frequency, covering at least part of the substrate (101; 201; 301) and comprising :
- two main surfaces (103, 104; 203, 204; 303, 304), at least one of them conforming to a surface (101a; 201a; 301a) of the substrate (101; 201; 301),
- one peripheral edge (102, 202, 302)
- at least first and second zones (Z1, Z2), the first zone comprising at least a portion of the peripheral edge of the holographic waveguide, the second zone comprising at least a portion of one of the main surfaces of the holographic waveguide, and
- a light emitter (LE) configured to emit light intended to be coupled into the holographic waveguide (HW) towards the second zone (Z2),
the holographic waveguide being configured so that light incoming on the first zone (Z1) is at least partially guided towards the second zone (Z2) being an output zone where light is coupled out of the holographic waveguide.

2. Optical article (100; 200; 300) according to claim 1, **characterized in that** the holographic waveguide (102; 202; 302) extends over at least 10% of the surface of the substrate, preferably over at least 50% of said surface, even more preferably over at least 70% of said surface and even more preferably over the whole surface of the substrate.

3. Optical article (100; 200; 300) according to one of the preceding claims, **characterized in that** it comprises a plurality of holographic waveguides.

4. Optical article (100; 200; 300) according to claim 3, **characterized in that** each holographic waveguide is configured to selectively propagate respectively different wavelengths of light between its respective first and second zones.

5. Optical article (100; 200; 300) according to claim 3 or 4, **characterized in that** rays of light propagated by each holographic waveguide come in or come out from the waveguide's respective second zone (Z2) according to different angles relative to the normal to said second zone.

6. Optical article (100; 200; 300) according to one of the preceding claims, **characterized in that**:
- the optical article further comprises a coupling device (CD) located on the periphery of one main surface of the waveguide, and configured to couple light into or out of the holographic waveguide, and
- the coupling device (CD) is preferably chosen from one of a coating or a grating.

7. Optical article (100; 200; 300) according to one of the preceding claims, **characterized in that** the first zone (Z1) extends over at least 50% of the peripheral edge of the holographic waveguide, preferably over at least 70% of said peripheral edge, even more preferably over the whole surface of said peripheral edge.

8. Optical article (200; 300) according to any of the preceding claims, **characterized in that** at least one of the main surfaces (203, 204; 303, 304), of the holographic waveguide (202; 302) extends parallel to a curved surface (201a; 301a) of the substrate (201; 301).

9. Optical article (100; 200; 300) according to any one of the preceding claims, **characterized in that** the two main surfaces of the holographic waveguide form a front surface and a rear surface, the rear surface being intended to be directed in the direction of an eye of a wearer, the front surface being intended to be directed towards an exterior environment and **in that** the second zone is an input zone and the first zone is an output zone.

10. Optical article (100; 200; 300) according to claim 9, **characterized in that** the optical article (100; 200; 300) is intended to be mounted on a frame and **in that** said light emitter (LE) is placed on the frame in the vicinity of the holographic waveguide.

## Patentansprüche

1. Optischer Artikel (100; 200; 300), wenigstens Folgendes umfassend:
- ein Substrat (101; 201; 301), bei dem es sich um einen halbfertigen Linsenrohling oder ein Brillenglas handelt, und
- einen holographischen Wellenleiter (102; 202; 302), der aus einem lichtempfindlichen Material ausgebildet ist, das einen Brechungsindex umfasst, der gemäß wenigstens einer Frequenz räumlich variiert, und der wenigstens einen Teil des Substrats (101; 201; 301) bedeckt und Folgendes umfasst:
- zwei Hauptflächen (103, 104; 203, 204; 303, 304), wobei wenigstens eine von diesen einer Oberfläche (101a; 201a; 301a) des Substrats (101; 201; 301) entspricht,
- einen peripheren Rand (102, 202, 302),
- wenigstens einen ersten und einen zweiten Bereich (Z1, Z2), wobei der erste Bereich wenigstens einen Abschnitt des peripheren Rands des holographischen Wellenleiters umfasst und der zweite Bereich wenigstens einen Abschnitt einer der Hauptflächen des holographischen Wellenleiters umfasst, und
- einen Lichtemitter (LE), der dazu ausgestaltet ist, Licht zu emittieren, das dazu vorgesehen ist, in den holographischen Wellenleiter (HW), hin zu dem zweiten Bereich (Z2) eingekoppelt zu werden,
wobei der holographische Wellenleiter so ausgestaltet ist, dass Licht, das auf den ersten Bereich (Z1) einfällt, wenigstens teilweise hin zu dem zweiten Bereich (Z2) geleitet wird, bei dem es sich um einen Ausgabebereich handelt, wo Licht aus dem holographischen Wellenleiter ausgekoppelt wird.

2. Optischer Artikel (100; 200; 300) nach Anspruch 1, **dadurch gekennzeichnet, dass** der holographische Wellenleiter (102; 202; 302) sich über wenigstens 10 % der Oberfläche des Substrats, vorzugsweise über wenigstens 50 % der Oberfläche, besonders bevorzugt über wenigstens 70 % der Oberfläche und ganz besonders bevorzugt über die gesamte Oberfläche des Substrats erstreckt.

3. Optischer Artikel (100; 200; 300) nach einem der vorangehenden Ansprüche, **dadurch gekennzeichnet, dass** er eine Mehrzahl holographischer Wellenleiter umfasst.

4. Optischer Artikel (100; 200; 300) nach Anspruch 3, **dadurch gekennzeichnet, dass** jeder holographische Wellenleiter dazu ausgestaltet ist, selektiv jeweils verschiedene Lichtwellenlängen zwischen seinem jeweiligen ersten und zweiten Bereich weiterzuleiten.

5. Optischer Artikel (100; 200; 300) nach Anspruch 3 oder 4, **dadurch gekennzeichnet, dass** Lichtstrahlen, die durch jeden holographischen Wellenleiter weitergeleitet werden, gemäß verschiedenen Winkeln bezogen auf die Normale des zweiten Bereichs in den jeweiligen zweiten Bereich (Z2) des Wellenleiters ein- oder aus diesem austreten.

6. Optischer Artikel (100; 200; 300) nach einem der vorangehenden Ansprüche, **dadurch gekennzeichnet, dass**:
- der optische Artikel ferner eine Kopplungsvorrichtung (CD) umfasst, die sich an der Peripherie einer Hauptfläche des Wellenleiters befindet und dazu ausgestaltet ist, Licht in den holographischen Wellenleiter ein- oder aus diesem auszukoppeln, und
- die Kopplungsvorrichtung (CD) vorzugsweise aus einem von einer Beschichtung oder einem Gitter ausgewählt ist.

7. Optischer Artikel (100; 200; 300) nach einem der vorangehenden Ansprüche, **dadurch gekennzeichnet, dass** der erste Bereich (Z1) sich über wenigstens 50 % des peripheren Rands des holographischen Wellenleiters, vorzugsweise über wenigstens 70 % des peripheren Rands, besonders bevorzugt über die gesamte Oberfläche des peripheren Rands erstreckt.

8. Optischer Artikel (200; 300) nach einem der vorangehenden Ansprüche, **dadurch gekennzeichnet, dass** wenigstens eine der Hauptflächen (203, 204; 303, 304) des holographischen Wellenleiters (202; 302) sich parallel zu einer gekrümmten Oberfläche (201a; 301a) des Substrats (201; 301) erstreckt.

9. Optischer Artikel (100; 200; 300) nach einem der vorangehenden Ansprüche, **dadurch gekennzeichnet, dass** die zwei Hauptflächen des holographischen Wellenleiters eine vordere Oberfläche und eine hintere Oberfläche ausbilden, wobei die hintere Oberfläche dazu vorgesehen ist, in Richtung eines Auges eines Trägers gerichtet zu werden, und die vordere Oberfläche dazu vorgesehen ist, hin zu einer äußeren Umgebung gerichtet zu werden, und dadurch, dass der zweite Bereich ein Eingabebereich ist und der erste Bereich ein Ausgabebereich ist.

10. Optischer Artikel (100; 200; 300) nach Anspruch 9, **dadurch gekennzeichnet, dass** der optische Artikel (100; 200; 300) dazu vorgesehen ist, an einem Rahmen angebracht zu werden, und dadurch, dass der Lichtemitter (LE) in der Nähe des holographischen Wellenleiters an dem Rahmen angeordnet ist.

## Revendications

1. Article optique (100 ; 200 ; 300) comprenant au moins :
- un substrat (101 ; 201 ; 301), qui est une ébauche de lentille semi-finie ou une lentille ophtalmique, et
- un guide d'ondes holographique (102 ; 202 ; 302) constitué d'un matériau photosensible présentant un indice de réfraction variant spatialement selon au moins une fréquence, recouvrant au moins une partie du substrat (101 ; 201 ; 301) et comprenant :
- deux surfaces principales (103, 104 ; 203, 204 ; 303, 304), au moins une d'entre elles épousant la forme d'une surface (101a ; 201a ; 301a) du substrat (101 ; 201 ; 301),
- un bord périphérique (102, 202, 302),
- au moins des première et deuxième zones (Z1, Z2), la première zone comprenant au moins une partie du bord périphérique du guide d'ondes holographique, la deuxième zone comprenant au moins une partie d'une des surfaces principales du guide d'ondes holographique, et
- un émetteur de lumière (LE) conçu pour émettre de la lumière destinée à être couplée à l'intérieur du guide d'ondes holographique (HW) vers la deuxième zone (Z2),
le guide d'ondes holographique étant conçu de telle sorte que la lumière incidente sur la première zone (Z1) est au moins partiellement guidée vers la deuxième zone (Z2), qui est une zone de sortie où la lumière est couplée à l'extérieur du guide d'ondes holographique.

2. Article optique (100 ; 200 ; 300) selon la revendication 1, **caractérisé en ce que** le guide d'ondes holographique (102 ; 202 ; 302) s'étend sur au moins 10 % de la surface du substrat, de préférence sur au moins 50 % de ladite surface, mieux sur au moins 70 % de ladite surface et mieux encore sur la totalité de la surface du substrat.

3. Article optique (100 ; 200 ; 300) selon une des revendications précédentes, **caractérisé en ce qu'**il comprend une pluralité de guides d'ondes holographiques.

4. Article optique (100 ; 200 ; 300) selon la revendication 3, **caractérisé en ce que** chaque guide d'ondes holographique est conçu pour propager sélectivement des longueurs d'onde respectivement différentes de lumière entre ses première et deuxième zones respectives.

5. Article optique (100 ; 200 ; 300) selon la revendication 3 ou 4, **caractérisé en ce que** des rayons de lumière propagés par chaque guide d'ondes holographique entrent ou sortent de la deuxième zone respective (Z2) du guide d'ondes selon des angles différents par rapport à la normale à ladite deuxième zone.

6. Article optique (100 ; 200 ; 300) selon une des revendications précédentes, **caractérisé en ce que** :
- l'article optique comprend en outre un dispositif de couplage (CD) situé sur la périphérie d'une surface principale du guide d'ondes, et conçu pour coupler la lumière à l'intérieur ou à l'extérieur du guide d'ondes holographique, et
- le dispositif de couplage (CD) est de préférence choisi entre un revêtement et un réseau.

7. Article optique (100 ; 200 ; 300) selon une des revendications précédentes, **caractérisé en ce que** la première zone (Z1) s'étend sur au moins 50 % du bord périphérique du guide d'ondes holographique, de préférence sur au moins 70 % dudit bord périphérique, mieux encore sur la totalité de la surface dudit bord périphérique.

8. Article optique (200 ; 300) selon l'une quelconque des revendications précédentes, **caractérisé en ce qu'**au moins une des surfaces principales (203, 204 ; 303, 304) du guide d'ondes holographique (202 ; 302) s'étend parallèlement à une surface incurvée (201a ; 301a) du substrat (201 ; 301).

9. Article optique (100 ; 200 ; 300) selon l'une quelconque des revendications précédentes, **caractérisé en ce que** les deux surfaces principales du guide d'ondes holographique forment une surface avant et une surface arrière, la surface arrière étant destinée à être dirigée dans la direction d'un œil d'un porteur, la surface avant étant destinée à être dirigée vers un environnement extérieur, et **en ce que** la deuxième zone est une zone d'entrée et la première zone est une zone de sortie.

10. Article optique (100 ; 200 ; 300) selon la revendication **9, caractérisé en ce que** l'article optique (100 ; 200 ; 300) est destiné à être monté sur une monture et **en ce que** ledit émetteur de lumière (LE) est placé sur la monture à proximité du guide d'ondes holographique.
